Europäisches Patentamt

European Patent Office

Office européen des brevets

(19)

(11) Veröffentlichungsnummer: **0 177 794**
B1

(12) **EUROPÄISCHE PATENTSCHRIFT**

(45) Veröffentlichungstag der Patentschrift:
20.04.88

(51) Int. Cl.⁴: **F 02 B 27/00,** F 02 B 27/02,
**F 02 M 35/10**

(21) Anmeldenummer: **85111553.5**

(22) Anmeldetag: **12.09.85**

(54) **Saugrohranlage für Mehrzylinder-Brennkraftmaschinen.**

(30) Priorität: **10.10.84 DE 3437102**

(43) Veröffentlichungstag der Anmeldung:
**16.04.86 Patentblatt 86/16**

(45) Bekanntmachung des Hinweises auf die Patenterteilung:
**20.04.88 Patentblatt 88/16**

(84) Benannte Vertragsstaaten:
**DE FR GB IT**

(56) Entgegenhaltungen:
**EP - A - 0 095 251**
**DE - A - 2 913 264**
**GB - A - 2 117 447**
**GB - A - 2 121 473**

(73) Patentinhaber: **AUDI AG, Postfach 220,
D-8070 Ingolstadt (DE)**

(72) Erfinder: **Ruf, Max, Römerstrasse 11,
D-7107 Obereisesheim (DE)**
Erfinder: **Korostenski, Erwin, Erlenweg 4,
D-7101 Oedheim (DE)**
Erfinder: **Steinwart, Johannes, Langer Zaun 10,
D-7104 Obersulm-Willsbach (DE)**

(74) Vertreter: **Speidel, Eberhardt et al,
Postfach 1320 Waldpromenade 26, D-8035 Gauting (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf eine Saugrohranlage für eine Mehrzylinder-Brennkraftmaschine, mit einer Verbrennungsluftführung, die ein Sammelsaugrohr und einen über ein Drosselklappenteil daran anschliessenden Ansaugverteiler aufweist, und mit nebeneinander angeordneten Einzelsaugrohren, die sich in einem Bogen über mehr als 90° erstrecken und von dem Ansaugverteiler zu den einzelnen Zylindern führen, wobei ein Abschnitt der Verbrennungsluftführung in dem von den Einzelsaugrohren umschlossenen Raum angeordnet ist und mit diesen eine einstückige Einheit bildet.

Bei bekannten Saugrohranlagen dieser Art (EP-A 0 095 251, GB-A 2 117 447) ist der von den Einzelsaugrohren umschlossene Raum als Ansaugverteiler ausgebildet, von dem die Einzelsaugrohre ausgehen. Das Sammelsaugrohr mit dem Drosselklappenteil ist seitlich an den Ansaugverteiler angeschlossen. Dadurch ergibt sich eine verhältnismässig grosse Baulänge für die Saugrohranlage, insbesondere dann, wenn eine Kraftstoff-Einspritzanlage mit einem Luftmengenmesser verwendet wird, der auf eine möglichst laminare Strömung angewiesen ist, die ein verhältnismässig langes Sammelsaugrohr erfordert. Ausserdem ist es kaum möglich, den Ansaugverteiler im Bedarfsfall so zu gestalten, dass eine gegenseitige Beeinflussung der einzelnen Ansaugvorgänge ausgeschlossen wird.

Der Erfindung liegt die Aufgabe zugrunde, eine Saugrohranlage der angegebenen Art zu schaffen, die trotz grosser Saugrohrlängen einen verhältnismässig geringen Platzbedarf aufweist und im Bedarfsfall ohne zusätzlichen Raumbedarf die Unterbringung eines Luftmengenmessers einer Kraftstoff-Einspritzanlage sowie eine solche Gestaltung des Ansaugverteilers ermöglicht, dass eine gegenseitige Beeinflussung der einzelnen Ansaugvorgänge ausgeschlossen ist.

Diese Aufgabe wird erfindungsgemäss durch die im Kennzeichen des Anspruchs 1 angegebenen Merkmale gelöst.

Durch die zueinander parallele Anordnung des Sammelsaugrohres und des Ansaugverteilers gelingt es, eine sehr grosse Gesamt-Saugrohrlänge, die sich aus der Länge des Sammelsaugrohres, der Länge des Ansaugverteilers und der Länge der Einzelsaugrohre zusammensetzt, auf kleinem Raum unterzubringen.

Da sich bei der erfindungsgemässen Saugrohranlage das Sammelsaugrohr geradlinig über eine verhältnismässig lange Strecke erstreckt, findet in diesem eine störungsfreie beruhigte Luftströmung statt. Dadurch ergibt sich die Möglichkeit, in dem Sammelsaugrohr einen Luftmengenmesser für eine Kraftstoff-Einspritzanlage anzuordnen, der auf eine beruhigte Strömung angewiesen ist. Ein derartiger Luftmengenmesser kann beispielsweise eine Hitzdraht-Luftmesseinrichtung oder eine Strömungsmesseinrichtung, z.B. mittels Karmann-Wirbel, sein. Bisher mussten diese Messeinrichtungen in einem eigenen geradlinigen Rohrstutzen angeordnet werden, der den Raumbedarf der Saugrohranlage erheblich vergrösserte.

Zur Montage des Luftmengenmessers kann zwischen zwei benachbarten Einzelsaugrohren ein in das Sammelsaugrohr mündender Durchbruch vorgesehen werden.

Die erfindungsgemässe Saugrohranlage eignet sich besonders für eine Brennkraftmaschine mit V-förmig angeordneten Zylinderreihen. Bei dieser Anwendung ist auf jeder Seite der Längsmittelebene der Einheit ein Flansch vorgesehen, wobei die einer ersten Zylindergruppe zugeordneten Einzelsaugrohre von dem einen Flansch und die der zweiten Zylindergruppe zugeordneten Einzelsaugrohre von dem anderen Flansch ausgehen und die Einzelsaugrohre der einen Gruppe im Uhrzeigersinn und die Einzelsaugrohre der anderen Gruppe entgegen dem Uhrzeigersinn um das Sammelsaugrohr verlaufen und in Längsrichtung der Einheit jeweils ein Einzelsaugrohr der einen Gruppe auf ein Einzelsaugrohr der anderen Gruppe folgt. Bei dieser Ausführung ist das Sammelsaugrohr zu etwa 300° von den Einzelsaugrohren der beiden Gruppen umschlossen. Dadurch wird ein symmetrischer Aufbau mit gleichlangen Einzelsaugrohren erreicht. Um dabei im Sammelsaugrohr und im Ansaugverteiler gegenläufige Strömungen, hervorgerufen durch sich überschneidende Ansaugvorgänge, zu vermeiden, kann der Ansaugverteiler durch eine axial sich erstreckende Trennwand in zwei Räume aufgeteilt werden, an welche bei V6-Motoren jeweils drei und bei V8-Motoren jeweils vier Zylinder angeschlossen sind, die den gleichen Zündabstand haben.

Die langen Einzelsaugrohre ergeben bei Vollast und niedriger Drehzahl ein hohes Drehmoment. Bei hohen Drehzahlen und Vollast wird jedoch die Leistung aufgrund des Strömungswiderstandes beschnitten. Um hier Abhilfe zu schaffen, ist es bekannt (GB-A 2 121 473), kurze Saugrohrlängen für hohe Drehzahlen und lange Saugrohrlängen für niedrige Drehzahlen vorzusehen, wobei zwei miteinander in Verbindung stehende Ansaugverteiler vorgesehen sind und jedes Einzelsaugrohr sich von dem ersten Ansaugverteiler durch den zweiten Ansaugverteiler hindurch zu einem Zylinder erstreckt und drehzahl- und/oder lastabhängig entweder mit dem einen oder mit dem anderen Saugrohrverteiler verbunden wird, um die effektive Saugrohrlänge zu verändern. Die Verwirklichung unterschiedlicher Saugrohrlängen lässt sich bei der erfindungsgemässen Saugrohranlage auf wesentlich einfachere Weise dadurch erreichen, dass zusätzlich zu jedem (ersten) Einzelsaugrohr ein zweites, kürzeres Einzelsaugrohr vorgesehen ist, das in das erste Einzelsaugrohr möglichst nahe des Anschlagflansches zum Zylinderkopf mündet und das durch eine Absperreinrichtung bei niedrigen Drehzahlen geschlossen ist, jedoch ab einer bestimmten Drehzahl, beispielsweise 3.500 U/min, voll oder mit steigender Drehzahl kontinuierlich geöffnet wird. Die den zweiten Einzelsaugrohren zugeordneten Absperreinrichtungen werden gemeinsam betätigt. Dies kann auf einfache Weise dadurch erreicht werden, dass die Absperreinrichtungen von Drehschiebern gebildet und die der ersten Zylinderreihe zugeordneten Drehschieber auf einer ersten gemeinsamen Welle und die der zweiten Zylinderreihe zugeordneten Drehschieber auf einer zweiten gemeinsamen Welle angeordnet sind, wobei diese beiden Wellen drehfest miteinandet gekoppelt sind und gemeinsam angetrieben werden, beispielsweise durch einen pneumatischen oder hydraulischen Stellmotor oder durch einen Elektromotor, der bei einer bestimmten Drehzahl eingeschaltet wird und die Drehschieber entweder sofort in die Öffnungsstellung bringt oder kontinuierlich entsprechend dem Drehzahlanstieg öffnet. Die Rückführung der Drehschieber in ihre Schliessstellung kann durch Federkraft oder durch Umpolung des Elektromotors erfolgen.

Zwei Ausführungsbeispiele der Erfindung werden im folgenden unter Bezugnahme auf die Zeichnungen beschrieben. Es zeigt:

Fig. 1 einen Querschnitt der Saugrohranlage für eine V8-Brennkraftmaschine,

Fig. 2 einen Längsschnitt entlang Linie 2-2 in Fig. 1,

Fig. 3 eine schematische Darstellung des Ansaugteilers,

Fig. 4 einen Querschnitt ähnlich Fig. 2 einer Ausführung, bei der für jeden Zylinder erste und zweite Einzelsaugrohre vorgesehen sind, und

Fig. 5 eine schematische Darstellung der Ausführung gemäss Fig. 4, aus der die Anordnung der ersten und zweiten Einzelsaugrohre, der Drehschieber für die zweiten Einzelsaugrohre und deren Antrieb hervorgeht.

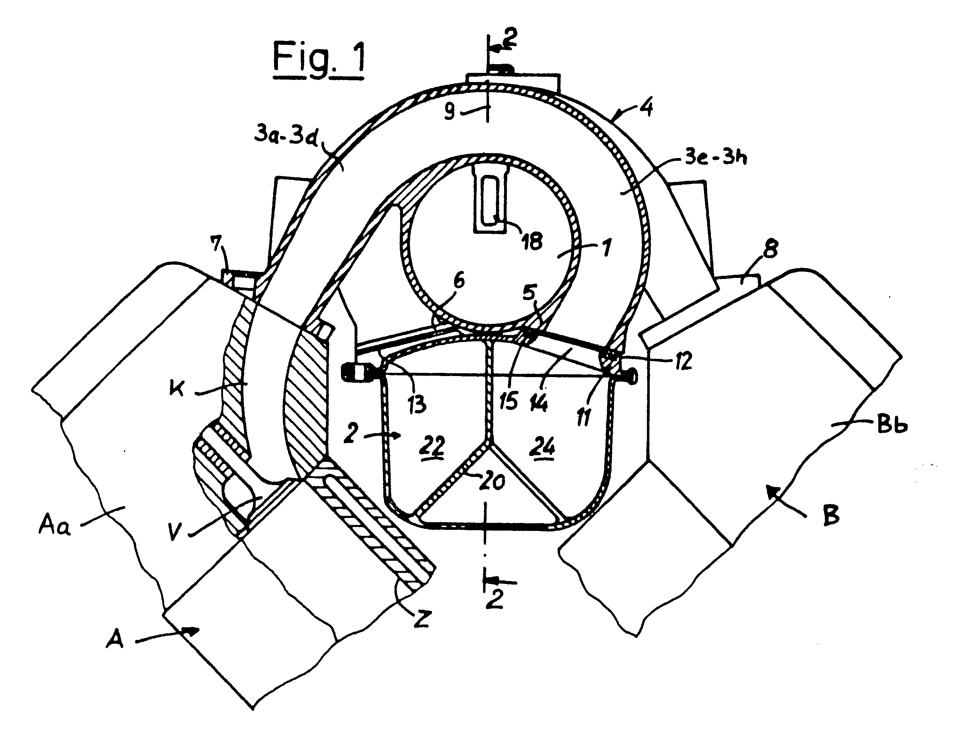

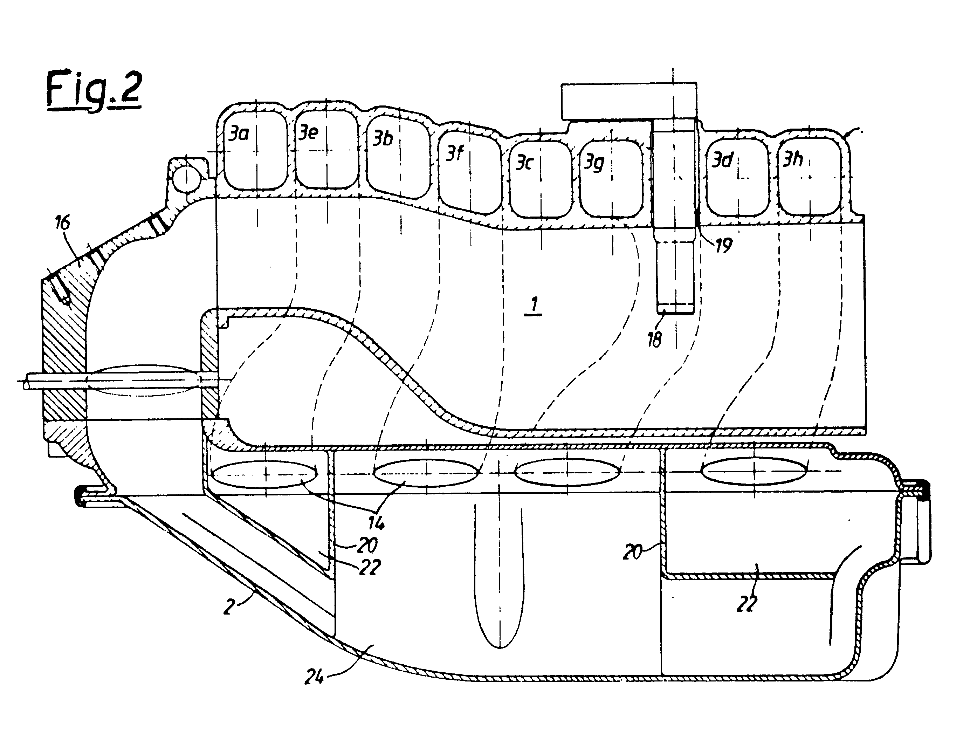

Die in Fig. 1 und 2 dargestellte Saugrohranlage ist für eine V8-Brennkraftmaschine bestimmt, die zwei parallele Zylinderreihen A und B mit Zylindern Z und Zylinderköpfen Aa uns Bb aufweist. In den Zylinderköpfen ist für jeden Zylinder ein durch ein Einlassventil V gesteuerter Einlasskanal K vorgesehen. Die Saugrohranlage weist ein Sammelsaugrohr 1, einen an dieses anschliessenden Ansaugverteiler 2 und nebeneinander angeordnete Einzelsaugrohre 3a-3d und 3e-3h auf, die zu den einzelnen Zylindern der Brennkraftmaschine führen. Die Einzelsaugrohre 3a-3d versorgen die Zylinder der einen Zylinderreihe und die Einzelsaugrohre 3e-3h versorgen die Zylinder der anderen Zylinderreihe. Das Sammelsaugrohr 1 und die Einzelsaugrohre 3a-3h sind zu einer einstückigen Einheit 4 zusammengefasst, die auf jeder Seite ihrer Längsmittelebene 9 einen Flansch 5 bzw. 6 aufweist, von dem die Einzelsaugrohre 3a-3d bzw. 3e-3h ausgehen.

Die Einzelsaugrohre erstrecken sich in einem Bogen über etwa 150° von ihrem Flansch 5 bzw. 6 zu einem Anschlussflansch 7 bzw. 8, mit dem die Einheit an den Zylinderköpfen der beiden Zylinderreihen angeschraubt ist. Das Sammelsaugrohr 1 erstreckt sich also praktisch durch den von den Einzelsaugrohren 3 umschlossenen Raum und hat keinen eigenen Platzbedarf.

Wie aus Fig. 2 ersichtlich ist, sind die Einzelsaugrohre 3 nebeneinander angeordnet, wobei jeweils ein Einzelsaugrohr für einen Zylinder der einen Zylinderreihe auf ein Einzelsaugrohr eines Zylinders der anderen Zylinderreihe folgt.

Im Ausführungsbeispiel ist zwischen der Einheit 4 und dem Ansaugverteiler 2 ein Zwischenflansch 11 angeordnet, an der der Ansaugverteiler 2 angeflanscht ist und der mit diesem an das Gehäuse der Brennkraftmaschine angeschraubt wird. Dieser Zwischenflansch 11 ist mit Planflächen 12, 13 versehen, auf denen die Einheit 4 mit ihren Flanschen 5, 6 aufliegt und die mit einem Durchbruch 14 für jedes Einzelsaugrohr 3a-3h versehen sind. Jeder Durchbruch 14 ist von einem Dichtungsring 15 umgeben, und die Einheit 4 wird beim Anschrauben der Flansche 7, 8 an die Zylinderköpfe auf die Dichtungen 15 gedrückt. Grundsätzlich kann jedoch der Zwischenflansch 11 mit der Einheit 4' aus einem Stück bestehen.

Der Ansaugverteiler 2 erstreckt sich über die ganze Länge der Einheit 4 und ist an seinem in Fig. 2 rechten Ende abgeschlossen und an seinem in Fig. 2 linken Ende über ein Drosselklappenteil 16 mit dem Sammelsaugrohr 1 in Verbindung. In dem Drosselklappenteil 16 ist eine Drosselklappe 16a für jede Zylinderreihe angeordnet.

Wie aus Fig. 2 ersichtlich ist, bildet das Sammelsaugrohr 1 zumindest in dem rechten Abschnitt eine glatte zylindrische Luftführung, so dass sich in diesem Bereich eine beruhigte Luftströmung einstellen kann. Daher ist es möglich, in diesem Bereich eine Luftmengenmesseinrichtung 18 für eine Kraftstoff-Einspritzanlage anzuordnen, bei der eine beruhigte Strömung zur Erzielung korrekter Messergebnisse wesentlich ist. Dies ist bzw. bei Hitzdraht-Luftmengenmessern, Heissfolien-Luftmengenmessern und dergleichen der Fall. Durch die Möglichkeit, diese Luftmengenmesseinrichtung 18 in der Einheit 10 anzuordnen, erübrigt sich der ansonsten erforderliche eigene Rohrstutzen für die Aufnahme der Luftmengenmesseinrichtung, der an das Saugrohr angesetzt wird und zusätzlichen Raum beansprucht. Zur Montage der Luftmengenmesseinrichtung 18 ist in der Wand der Einheit 10 zwischen zwei benachbarten Einzelsaugrohren ein in das Sammelsaugrohr 1 mündender Durchbruch vorgesehen, der in Fig. 2 bei 19 angedeutet ist.

Bei der dargestellten und beschriebenen Anordnung haben alle Einzelsaugrohre 3a-3h die gleiche Form und Länge. Da jedoch der Ansaugvorgang nicht in aufeinander folgenden Zylindern, sondern bei V8-Brennkraftmaschinen beispielsweise in der Reihenfolge der Zylinder 1-5-4-8-6-3-7-2 stattfindet, ist es zweckmässig, den Innenraum des Ansaugverteilers 2 durch eine Trennwand 20 in zwei Teilräume 22, 24 aufzuteilen, denen jeweils eine eigene Drosselklappe im Drosselklappenteil 16 zugeordnet ist und an die jeweils die Zylinder mit gleichem Zündabstand angeschlossen sind. Dies bedeutet, dass an den einen Teilraum 22 die Einzelsaugrohre 3a, 3d, 3f und 3g und an den anderen Teilraum 24 die Einzelsaugrohre 3b, 3c, 3e und 3h angeschlossen sind.

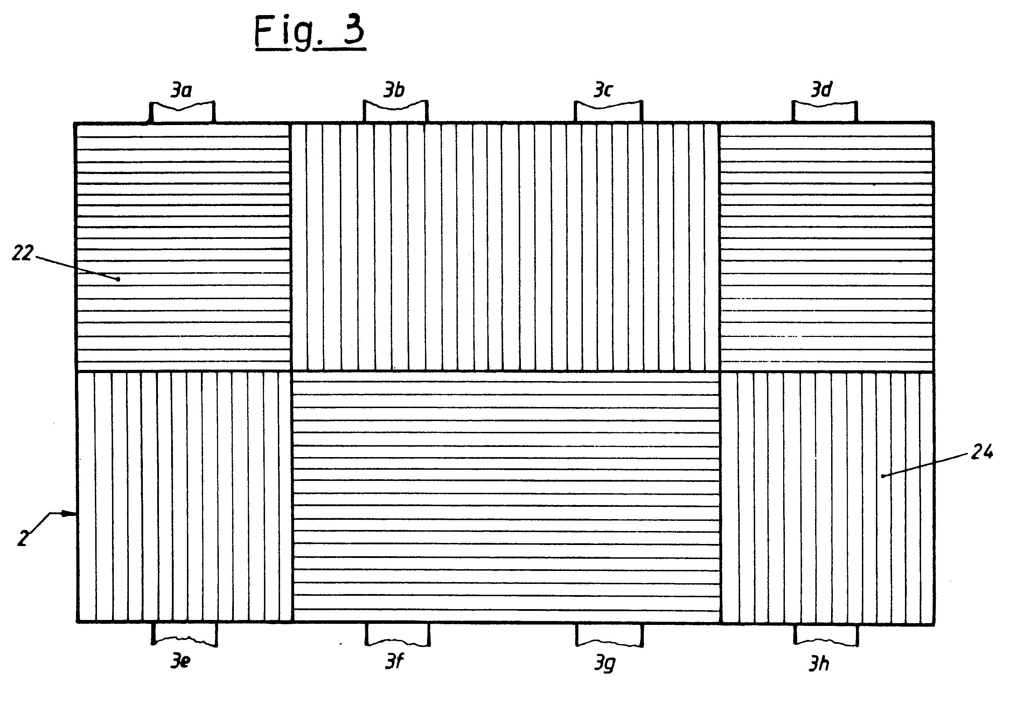

In Fig. 3 ist diese Aufteilung des Ansaugverteilers schematisch dargestellt, und zwar ist der Teilraum 22 waagrecht und der Teilraum 24 senkrecht schraffiert.

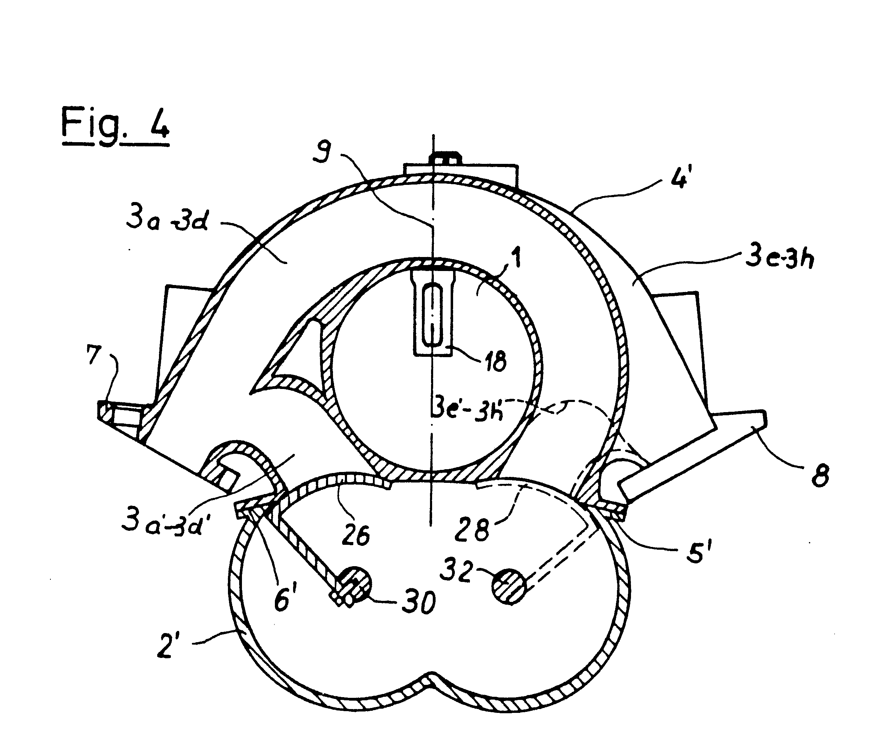

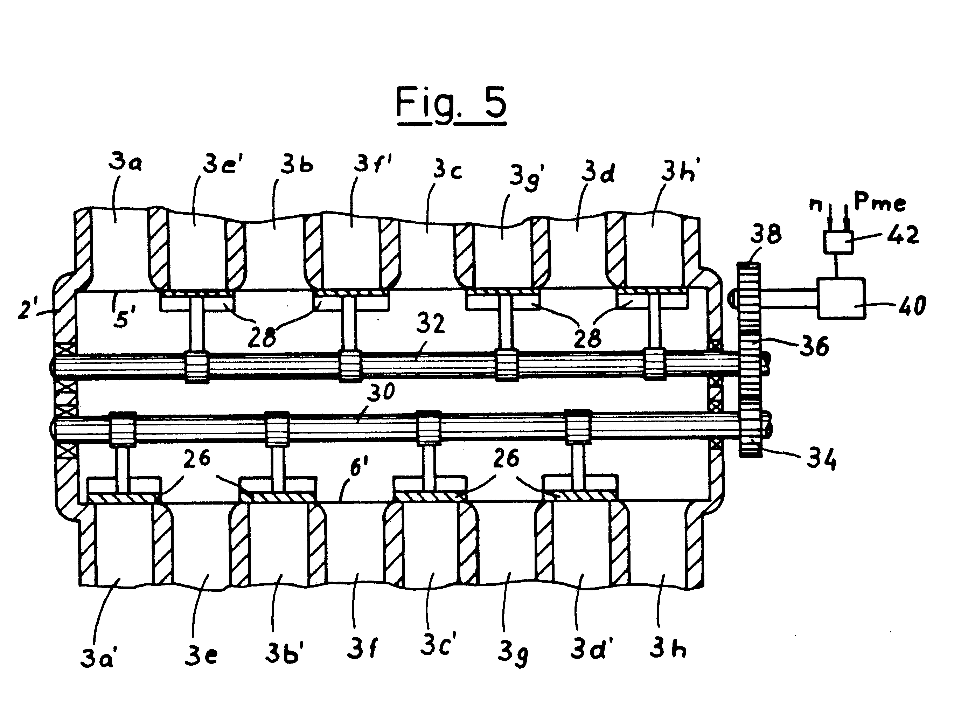

Die Ausführung gemäss den Fig. 4 und 5 unterscheidet sich von dem ersten Ausführungsbeispiel im wesentlichen nur dadurch, dass zusätzlich zu jedem Einzelsaugrohr 3a bis 3h ein zweites kürzeres Einzelsaugrohr 3a' bis 3h' vorgesehen ist. Während die (ersten) Einzelsaugrohre 3a bis 3d wie beim ersten Beispiel von dem ersten Flansch 5' ausgehen, gehen die diesen zugeordneten zweiten Einzelsaugrohre 3a' bis 3d' von dem zweiten Flansch 6' aus und sie münden in die ersten Einzelsaugrohre 3a bis 3d nahe des Anschlussflansches 7. In entsprechender Weise gehen die den (ersten) Einzelsaugrohren 3d bis 3h zugeordneten zweiten Einzelsaugrohre 3d' bis 3h' von dem ersten Flansch 5 aus, während diese ersten Einzelsaugrohre3e bis 3h von dem zweiten Flansch 6 ausgehen. Dies ist in der schematischen Darstellung der Fig. 5 veranschaulicht. Die Mündung jedes zweiten Einzelsaugrohres 3a' bis 3h' ist von einem Drehschieber beherrscht. Die Drehschieber, die den von dem zweiten Flansch 6 ausgehenden zweiten Einzelsaugrohren 3a' bis 3d' zugeordnet sind, sind mit 26 bezeichnet, und die Drehschieber, die den von dem ersten Flansch 5 ausgehenden zweiten Einzelsaugrohren 3e'bis 3h' zugeordnet sind, sind mit 28 bezeichnet. Die Drehschieber 26 sind auf einer ersten gemeinsamen Welle 30 und die Drehschieber 28 sind auf einer zweiten gemeinsamen Welle 32 angeordnet. Die Wellen 30 und 32 erstrecken sich in Längsrichtung der Einheit 4' und sind in der Wand des Ansaugverteilers 2' gelagert. Die Trennwände im Ansaugverteiler sind hierbei der besseren Übersichtlichkeit wegen weggelassen. Die Wellen 30 und 32 sind durch Zahnräder 34 und 36 drehfest miteinander verbunden. In das Zahnrad 36 greift ein Antriebsritzel 38 ein, das durch einen pneumatischen oder hydraulischen Stellmotor oder einen Elektromotor 40 angetrieben werden kann, um die Wellen 30 und 32 gemeinsam zu drehen und dadurch alle Drehschieber 26 und 28 gemeinsam zu verschwenken. In der in Fig. 4 und 5 dargestellten Lage sperren die Drehschieber 26, 28 die zugehörigen zweiten Einzelsaugrohre 3a' bis 3h' ab, so dass, wie beim ersten Ausführungsbeispiel, nur die ersten Einzelsaugrohre 3a bis 3h wirksam sind. Dadurch wird bei Vollast und niedriger Drehzahl ein hohes Drehmoment erzeugt. Bei Vollast und hoher Drehzahl bilden jedoch die ersten Einzelsaugrohre aufgrund ihrer Länge einen nicht unbeträchtlichen Strömungswiderstand, durch den die Höchstleistung beschnitten wird. Daher werden ab einer bestimmten Maschinendrehzahl, z.B. ab 3.500 U/min, die Drehschieber 26 und 28 geöffnet, so dass nun die Ansaugluftströme überwiegend über die kurzen zweiten Einzelsaugrohre 3a' bis 3h' zu den einzelnen Zylindern gelangen können. Dadurch wird die Höchstleitung bei Vollast erheblich gesteigert.

Der die Drehschieber 26, 28 verschwenkende Motor 40 kann durch eine Steuereinheit 42 gesteuert werden, in der ein Kennfeld mit der Drehzahl und der Last (Mitteldruck) der Brennkraftmaschine als Parametern gespeichert sind und die ein derartiges Öffnen und Schliessen der Drehschieber 26, 28 bewirkt, dass bei jeder Drehzahl und Last die günstigsten Strömungsverhältnisse für die Ansaugluft, z.B. im Bereich der Einspritzdüsen, erreicht werden. Dabei ist sowohl eine teilweise als auch eine volle Öffnungsstellung der Drehschieber möglich.

Bei einer derartigen Kennfeldsteuerung ist der Motor 40 vorzugsweise ein Elektromotor, der polumschaltbar sein kann, um sowohl die Öffnungs- als auch die Schliessbewegung der Drehschieber durchführen zu können. Es kann aber auch ein doppelt wirkender Pneumatik- oder Hydraulikmotor verwendet werden, der je nach Beaufschlagung im Öffnungs- oder im Schliesssinn wirkt. Alternativ können die Drehschieber durch eine nicht dargestellte Feder im Schliesssinn beaufschlagt sein, so dass der Motor 40 nur die Öffnungsbewegung bewirkt und die Drehschieber nach Ausserbetriebsetzung des Motors durch die Feder in ihre Schliessstellung gebracht werden.

Die Erfindung ist nicht auf die dargestellten Ausführungseispiele beschränkt, sondern auch bei Mehrzylinder-Brennkraftmaschinen mit nur einer Zylinderreihe anwendbar. In diesem Fall ist nur ein Flansch 5 oder 6 vorgesehen, von dem die Einzelsaugrohre ausgehen.

**Patentansprüche**

1. Saugrohranlage für eine Mehrzylinder-Brennkraftmaschine, mit einer Verbrennungsluftführung, die ein Sammelsaugrohr (1) und einen über ein Drosselklappenteil (16) daran anschliessenden Ansaugverteiler (2) aufweist, und mit nebeneinander angeordneten Einzelsaugrohren (3a-3h), die sich in einem Bogen über mehr als 90° erstrecken und von dem Ansaugverteiler zu den einzelnen Zylindern (Z) führen, wobei ein Abschnitt der Verbrennungsluftführung in dem von den Einzelsaugrohren umschlossenen Raum angeordnet ist und mit diesen eine einstückige Einheit (4) bildet, dadurch gekennzeichnet, dass

a) das Sammelsaugrohr (1) von den Einzelsaugrohren (3a-3h) umschlossen ist,

d) die Einheit (4) mindestens einen parallel zum Sammelsaugrohr (1) verlaufenden Flansch (5, 6) aufweist, von dem die Einzelsaugrohre (3a-3h) ausgehen, und

c) der Ansaugverteiler (2) direkt oder über einen Zwischenflansch (11) an dem Flansch (5, 6) befestigt ist und am einen Ende über das Drosselklappenteil (16) mit dem Sammelsaugrohr (1) in Verbindung steht.

2. Saugrohranlage nach Anspruch 1, dadurch gekennzeichnet, dass in dem Sammelsaugrohr (1) ein Luftmengenmesser (18) für eine Kraftstoff-Einspritzanlage angeordnet ist.

3. Saugrohranlage nach den Ansprüchen 1 und 2, dadurch gekennzeichnet, dass zwischen zwei benachbarten Einzelsaugrohren ein in das Sammelsaugrohr (1) mündender Durchbruch (19) für die Montage des Luftmengenmessers (18) vorgesehen ist.

4. Saugrohranlage nach Anspruch 1 für eine Brennkraftmaschine mit V-förmig angeordneten Zylinderreihen, dadurch gekennzeichnet, dass auf jeder Seite der Längsmittelebene (9) der Einheit (4) ein Flansch (5, 6) vorgesehen ist, dass einer ersten Zylinderreihe zugeordnete Einzelsaugrohre (3a-3d) von dem einen Flansch (5) und einer zweiten Zylinderreihe zugeordnete Einzelsaugrohre (3e-3h) von dem anderen Flansch (6) ausgehen, dass die Einzelsaugrohre (3d-3h) der einen Zylinderreihe im Uhrzeigersinn und die Einzelsaugrohre (3a-3d) der anderen Zylinderreihe entgegen dem Uhrzeigersinn um das Sammelsaugrohr (1) verlaufen, und dass in Längsrichtung der Einheit (4) jeweils ein Einzelsaugrohr der einen Zylinderreihe auf ein Einzelsaugrohr der anderen Zylinderreihe folgt.

5. Saugrohranlage nach Anspruch 4, dadurch gekennzeichnet, dass der Ansaugverteiler (2) durch eine sich axial erstreckende Trennwand (20) in zwei Teilräume (22, 24) aufgeteilt ist, an die jeweils Einzelsaugrohre (3a, 3d, 3f, 3g bzw. 3e, 3b, 3c, 3h) solcher Zylinder angeschlossen sind, die in der Zündfolge aufeinander folgen und den gleichen Zündabstand voneinander haben.

6. Saugrohranlage nach Anspruch 1 für eine Brennkraftmaschine mit zwei parallelen Zylinderreihen, dadurch gekennzeichnet,

- dass auf jeder Seite der Längsmittelebene (9) der Einheit (4') ein Flansch (7, 8) vorgesehen ist,
- dass der ersten Zylinderreihe von dem ersten Flansch (5') ausgehende sich entgegen dem Uhrzeigersinn um das Sammelsaugrohr erstreckende erste Einzelsaugrohre (3a-3d) und von dem zweiten Flansch (6') ausgehende kürzere zweite Einzelsaugrohre (3a'-3d') zugeordnet sind, die in die ersten Einzelsaugrohre (3a-3d) münden,
- dass der zweiten Zylinderreihe von dem zweiten Flansch (6') ausgehende sich im Uhrzeigersinn um das Sammelsaugrohr (1) erstreckende erste einzelsaugrohre (3e-3h) und von dem ersten Flansch (5') ausgehende kürzere zweite Einzelsaugrohre (3e'-3h') zugerodnet sind, die in die ersten Einzelsaugrohre (3e-3h) münden,
- dass in Längsrichtung der Einheit (4') jeweils ein Einzelsaugrohr der ersten Zylinderreihe auf ein Einzelsaugrohr der zweiten Zylinderreihe folgt, und
- dass gemeinsam betätigbare Absperreinrichtungen (26, 28) für die zweiten Einzelsaugrohre (3a'-3h') vorgesehen sind.

7. Saugrohranlage nach Anspruch 6, dadurch gekennzeichnet, dass die Absperreinrichtungen (26, 28) von Drehschiebern gebildet sind, und die Drehschieber (26 bzw. 28), die den von einem Flansch (6' bzw. 5') ausgehenden zweiten Einzelsaugrohren (3a'-3d' bzw. 3e'-3h') zugeordnet sind, jeweils auf einer gemeinsamen Welle (30 bzw. 32) angeordnet sind.

8. Saugrohranlage nach Anspruch 6 oder 7, dadurch gekennzeichnet, dass die Absperreinrichtungen in Abhängigkeit von der Drehzahl der Brennkraftmaschine derart steuerbar sind, dass sie im unteren Drehzahlbereich geschlossen sind und ab einer bestimmten Drehzahl entweder voll geöffnet oder mit ansteigender Drehzahl kontinuierlich geöffnet werden.

**Claims**

1. Air intake system for multi-cylinder internal combustion engines with a combustion air duct comprising an intake manifold (1) and an intakte distributor (2) connected thereto by way of a throttle valve member (16), and with individual suction pipes (3a-3h) arranged next to one another and describing an arc of more than 90° and extending from the intakte distributor to the individual cylinders (Z), whereby a portion of the combustion air duct is arranged within the space enclosed by the individual suction pipes and forms with said pipes a one-piece unit (4) characterized in that

a) the intake manifold (1) is encircled by the individual suction pipes (3a-3h),

b) the unit (4) comprises at least one flange (5, 6) which runs in parallel to the induction manifold (1) and from which the individual suction pipes (3a-3h) emerge, and

c) the intake distributor (2) is directly or by way of an intermediate flange (11) attached to the flange (5, 6) and is with one end in communication with the intake manifold (1) by way of the throttle valve member (16).

2. Air intake system according to Claim 1, characterized in that an airflow meter (18) for a fuel injection system is fitted inside the intake manifold (1).

3. Air intake system according to Claim 1 and 2, characterized in that an aperture (19) is provided in the intake manifold (1) between two neighbouring individual suction pipes to permit assembly of the airflow meter (18).

4. Air intake system according to Claim 1 for an internal combustion engine with rows of cylinders arranged in a V pattern, characterized in that there is a flange (5, 6) on both sides of the central longitudinal plane (9) of the unit (4), that the individual suction pipes (3a-3d) are subordinated to one row of cylinders and emerge from the flange (5), while the individual suction pipes (3e-3h) are subordinated to the other row of cylinders and emerge from the other flange (6), that the individual suction pipes (3e-3h) for one row of cylinders encompasses the intake manifold (1) in a clockwise direction and the individual suction pipes (3a-3d) for the other row of cylinders run in an anti-clockwise direction, and that in a longitudinal direction along the unit (4) each individual suction pipe for one row of cylinders is followed by an individual suction pipe for the other row of cylinders.

5. Air intake system according to Claim 4, characterized in that the intake distributor (2) is divided by a partition wall (20) extending in an axial direction into two partial chambers (22, 24) each of which is connected to the individual suction pipes (3a, 3d, 3f, 3g or 3e, 3b, 3c, 3h) for those cylinders which follow each other consecutively in the ignition sequence and have the same ignition distance from each other.

6. Air intake system according to Claim 1 for an internal combustion engine with two parallel rows of cylinders, characterized in that

- on each side of the central longitudinal plane (9) of the unit (4') there is a flange (7, 8),
- the primary individual suction pipes (3a, 3d) for the first row of cylinders emerge from the first flange (5') and extend around the intake manifold (1) in an anti-clockwise direction and shorter secondary individual suction pipes (3a'-3d') emerge from the second flange (6') and join the primary individual suction pipes (3a-3d),
- the primary individual suction pipes (3e-3h) for the second row of cylinders emerge from the second flange (6') and extend around the intake manifold (1) in a clockwise direction and shorter secondary individual suction pipes (3e'-3h') emerge from the first flange (5') and join the primary individual suction pipes (3e-3h),

- each individual suction pipe for the first row of cylinders is followed by an individual suction pipe for the second row of cylinders along the length of the unit (4'), and

- shutoff devices (26, 28) for the secondary individual suction pipes (3a'-3h') are provided and are actuated together.

7. Air intake system according to Claim 6, characterized in that the shut-off devices (26, 28) are designed as rotary valves, and the rotary valves (26 or 28) which are subordinated to the secondary individual suction pipes (3a'-3d' or 3e'-3h') emerging from one flange (6' or 5') are arranged on a common shaft (30 or 32).

8. Air intake system according to claim 6 or 7, characterized in that the shut-off devices are controlled in dependance on the speed of the internal combustion engine in such a way that they are closed in tha lower speed range and, from a predetermined speed, they are either fully openend or else gradually openend as speed increases.

**Revendications**

1. Système d'admission d'un moteur à combustion interne à plusieurs cylindres, avec un système de guidage de l'air de combustion qui comprend un collecteur d'admission (1) et un répartiteur d'admission (2) raccordé à ce dernier par un boîtier de papillon (16), et avec des tubulures d'admission individuelles (3a-3h) disposées l'une à côté de l'autre, qui décrivent une courbure de plus de 90° et qui relient le répartiteur d'admission aux différents cylindres (Z), une partie du système de guidage de l'air de combustion étant située dans le creux formé par les tubulures d'admission individuelles avec lesquelles elle forme une seule unité (4), caractérisé par ce que

a) le collecteur d'admission (1) est entouré des tubulures d'admission individuelles (3a-3h);

b) l'unité (4) accuse au moins une bride (5, 6) qui est parallèle au collecteur d'admission (1) et à laquelle sont raccordées les tubulures d'admission individuelles (3a-3h);

c) le répartiteur d'admission (2) est fixé directement ou par l'intermédiaire d'une bride (11) à la bride (5, 6) et que l'une de ses extrémités est raccordée au collecteur d'admission (1) par l'intermédiaire du boîtier de papillon (16).

2. Dispositif d'admission suivant revendication 1, caractérisé par ce qu'un débitmètre d'air (18) pour système d'injection de carburant est placé dans le collecteur d'admission (1).

3. Dispositif d'admission suivant revendications 1 et 2, caractérisé par ce qu'un orifice (19) destiné au montage du débitmètre d'air (18) et débouchant dans le collecteur d'admission (1) est prévu entre deux tubulures d'admission individuelles voisines.

4. Dispositif d'admission suivant revendication 1 pour moteur à combustion interne dont les rangées de cylindre sont disposées en V, caractérisé par ce qu'une bride (5, 6) est prévue de chaque côté du plan médian longitudinal (9) de l'unité (4), que les tubulures d'admission individuelles (3a-3d) affectées à une première rangée de cylindre sont raccordées à la bride (5) et les tubulures d'admission individuelles (3e-3h) affectées à une deuxième rangée de cylindres sont raccordées à l'autre bride (6), que les tubulures d'admission individuelles (3e-3h) d'une rangée de cylindre sont disposées dans le sens des aiguilles d'une montre et les tubulures d'admission individuelles (3a-3d) de l'autre rangée de cylindres dans le sens contraire à celui des aiguilles d'une montre autour du collecteur d'admission (1) et qu'à chaque tubulure d'admission individuelle d'une rangée de cylindre succède une tubulure d'admission individuelle de l'autre rangée de cylindres, dans le sens longitudinal de l'unité 4.

5. Dispositif d'admission suivant revendication 4, caractérisé par ce que le répartiteur d'admission (2) est divisé par une paroi de séparation axiale (20) en deux chambres (22, 24) et qu'à chaque chambre sont raccordées les tubulures d'admission individuelles (3a, 3d, 3f, 3g ou 3e, 3b, 3c, 3h) des cylindres qui se suivent dans l'ordre d'allumage et qui ont le même intervalle d'allumage l'un par rapport à l'autre.

6. Dispositif d'admission suivant revendication 1 pour moteur à combustion interne avec deux rangées parallèles de cylindres, caractérisé par ce que

- une bride (7, 8) est prévue de chaque côté du plan médian longitudinal (9) de l'unité (4'),

- les premières tubulures d'admission individuelles (3a-3d) raccordées à la première bride (5') et entourant le collecteur d'admission dans le sens contraire à celui des aiguilles d'une montre et les deuxièmes tubulures d'admission individuelles (3a'-3d'), plus courtes, raccordées à la deuxième bride (6') et débouchant dans les premières tubulures d'admission individuelles (3a-3d), sont affectées à la première rangée de cylindres,

- les premières tubulures d'admission individuelles (3e-3h) qui sont raccordées à la deuxième bride (6') et qui entourent le collecteur d'admission (1) dans le sens des aiguilles d'une montre et les deuxièmes tubulures d'admission individuelles (3e'-3h'), plus courtes, qui sont raccordées à la première bride (5') et qui débouchent dans les premières tubulures d'admission individuelles (3e-3h) sont affectées à la deuxième rangée de cylindres,

- dans le sens longitudinal de l'unité (4') chaque tubulure d'admission individuelle de la première rangée de cylindres est disposée à côté d'une tubulure d'admission individuelle de la deuxième rangée de cylindres,

- des dispositif d'obturation (26, 28) commandés en commun sont prévus pour les deuxièmes tubulures d'admission individuelles (3a'-3h').

7. Dispositif d'admission suivant revendication 6, caractérisé par ce que les dispositifs d'obturation (26, 28) sont constitués par des tiroirs rotatifs et que les tiroirs rotatifs (26 ou 28) qui sont affectés aux deuxièmes tubulures d'admission individuelles (3a'-3d' ou 3e'-3h') lesquelles sont raccordées à une bride (5' ou 6'), sont disposées sur un arbre commun (30 ou 32).

8. Dispositif d'admission suivant revendications 6 ou 7, caractérisé par ce que les dispositifs d'obturation peuvent être commandés en fonction du régime du moteur à combustion interne de manière qu'ils sont en position de fermeture aux régimes inférieurs du moteur et qu'à partir d'un régime déterminé ils s'ouvrent ou entièrement ou progressivement au fur et à mesure que le régime augmente.

0 177 794

# Fig. 1

Fig.2

# Fig. 3

Fig. 4

# Fig. 5